# EUROPÄISCHE PATENTSCHRIFT

(11) **EP 3 302 052 B1**
(45) Veröffentlichungstag und Bekanntmachung des Hinweises auf die Patenterteilung: **16.10.2019**
(21) Anmeldenummer: 16724385.6
(22) Anmeldetag: 19.05.2016
(51) Int. Cl.: A01M 7/00, A01M 21/00, A01M 21/02, A01M 21/04

(54) **UNKRAUTREGULIERUNGSVORRICHTUNG**
WEED CONTROLLING DEVICE
DISPOSITIF DE RÉGULATION DES MAUVAISES HERBES

(30) Priorität: 29.05.2015 DE 102015209879
(43) Veröffentlichungstag der Anmeldung: 11.04.2018
(73) Patentinhaber: Robert Bosch GmbH, 70442 Stuttgart (DE)
(72) Erfinder: ALBERT, Amos, 71229 Leonberg (DE); MICHAELS, Andreas, 71272 Renningen (DE)
(86) Internationale Anmeldenummer: PCT/EP2016/061195
(87) Internationale Veröffentlichungsnummer: WO 2016/193003

(56) Entgegenhaltungen:
- DE-A1- 4 039 797
- DE-A1-102013 222 776
- FR-A1- 2 860 124

## Beschreibung

### Stand der Technik

Die Unkrautregulierung in der Landwirtschaft ist eine sehr arbeitsintensive Aufgabe, besonders im biologischen Anbau, die den Einsatz von Chemikalien verbietet oder einschränkt. Je nach angebauter Kultur ist die Unkrautregulierung in unmittelbarer Nähe der Nutzpflanze notwendig. Diese Regulierung findet i.A. im frühen Wachstumszustand. Sowohl Nutzpflanze als auch Unkraut sind da noch sehr klein und nahe beieinander. Um eine Beschädigung der Nutzpflanze zu vermeiden, ist es zielführend selektive Methoden anzuwenden. Dies erfolgt im biologischen Anbau (z.B. für Möhren) durch eine arbeitsintensive, körperschädigende manuelle Arbeit (mit so genannten "Jäte-Fliegern": Saison-Arbeitskräfte liegen auf dem Bauch auf einer Pritsche und entfernen die Unkräuter).

Die vorliegende Erfindung erfüllt diese Arbeit autonom und wird auch den wirtschaftlichen Anforderungen gerecht (schnelles und präzises Arbeiten).

Für Sonderkulturen mit größeren Pflanzabständen (z. B. Zuckerrüben, Salat) sind Tratkoranbaugeräte bekannt, welche in der Lage sind, einzelne Nutzpflanzen zu erkennen und entsprechende Werkzeuge so anzusteuern, dass die Fläche der Nutzpflanze unbearbeitet bleibt. Für diese Aufgabe ist keine Selektivität notwendig. Das heißt, dass diese Systeme nicht die zu überarbeitenden Fläche überprüfen, sondern vielmehr das Werkzeug "auf Blind" anhand der bekannten Nutzpflanzenposition gesteuert werden. Allgemeinhin definiert der Abstand zur Nutzpflanze die Genauigkeitsanforderungen.

Alle bekannten Geräte sind aber nicht genau genug um in Kulturen mit kleinen Pflanzabständen (z. B. Karotten) die Unkrautregulierung vorzunehmen. Hier ist eine Unkrautregulierung in unmittelbarer Nähe zur Nutzpflanze in einem frühen Stadium notwendig und erfordert heute eine manuelle Arbeit.

Aus der DE 40 39 797 A1 ist eine Vorrichtung zur Unkrautbekämpfung bekannt, wobei ein Aktor zur Vernichtung des Unkrauts permanent läuft und erst wenn durch einen Sensor eine Kulturpflanze erkannt wird kurzzeitig unterbrochen wird.

Die DE 10 2013 222 776 A1 offenbart eine Einrichtung zur Beschädigung eines Beikrauts mit einem Stempel und einer Führungseinrichtung zur Führung des Stempels.

### Offenbarung der Erfindung

Gegenstand der vorliegenden Erfindung ist eine Vorrichtung zur Beschädigung von Beikraut sowie ein Verfahren zur Beschädigung von Beikraut gemäß den Hauptansprüchen. Durch die erfindungsgemäße Vorrichtung und das erfindungsgemäße Verfahren ist es nunmehr möglich äußerst schnell und präzise eine Unkraut bzw. Beikrautregulierung vorzunehmen. Insbesondere in Kulturen mit kleinen Pflanzabständen (z. B. Karotten) ist es durch die vorliegende Erfindung möglich, das unerwünschte Beikraut in unmittelbarer Nähe zur Nutzpflanze in einem sehr frühen Stadium zu beschädigen bzw. abzutöten.

Bei der Manipulatoreinheit handelt es sich hierbei um eine von der Vorrichtung separate Einheit. Die Manipulatoreinheit ist insbesondere ausgebildet, das Bearbeitungswerkzeug unabhängig von der Bewegung der gesamten Vorrichtung zu positionieren. Die Manipulatoreinheit ist ferner ausgebildet, das Bearbeitungswerkzeug relativ zu bzw. unabhängig von der Vorrichtung zu positionieren. Die Manipulatoreinheit ist außerdem ausgebildet, das Bearbeitungswerkzeug parallel zu dem Boden, insbesondere in alle 3 Dimensionen zu bewegen bzw. zu positionieren.

Das Bearbeitungswerkzeug ist ausgebildet, einen impulsförmigen Druck auszuüben, um das Beikraut zu beschädigen, wobei das Bearbeitungswerkzeug insbesondere als Stempel ausgebildet ist. Unter dem Begriff Stempel ist im Rahmen der vorliegenden Erfindung eine Vorrichtung zu verstehen, welche ausgebildet ist, Pflanzen bzw. Beikraut mechanisch in den Boden zu drücken, wodurch der Nutzpflanze ein Wachstumsvorsprung
ermöglicht wird. Das gezielte und impulsförmige Auslösen des mechanischen Stempels kann hierbei beispielsweise mittels einer rotierenden Schwungmassen ermöglicht werden, durch welche die benötigte Energie aufgebaut und gespeichert werden kann (Prinzip eines Akku-Naglers). Das gezielte und impulsförmige Auslösen des mechanischen Stempels kann auch durch gezielte Umladevorgänge (Prinzip des Stoßwelleninjektors, Wirbelstromaktors) umgesetzt werden, wobei der Aufbau und die Speicherung der elektrischen Energie beispielsweise mittels von Kondensatoren bzw. Spulen erfolgen kann. Ferner kann das impulsförmige Auslösen des mechanischen Stempels auch durch Zündung einer Gasladung erfolgen. Eine weitere Alternative ist die Speicherung der Energie durch pneumatische bzw. hydraulische Baugruppen mit impulsförmiger Auslösung des mechanischen Stempels durch Ventilöffnung (Prinzip eines Druckluft-Naglers).

Ohne den Rahmen der vorliegenden Erfindung zu verlassen, ist es denkbar, zur Beschädigung des Beikrauts folgende Maßnahmen vorzusehen: einen Laser zum gezielten Einbringen von Energie an die Unkräuter (Zerstörung der Zellstruktur, Wachstumshemmung); Einen gebündelten Wasserstrahl mit entsprechendem mechanischen Zerstörungseffekt; ein gezieltes Besprühen bzw. Bestrahlen mit chemischen Mitteln (Microdot) anstatt flächigem Auftragen; eine gezielte Beeinflussung der Unkräuter durch Injektion mit entsprechenden Mitteln zur Wachstumshemmung oder Zerstörung. Durch das impulsförmige / schnelle Auslösen des Bearbeitungswerkzeugs, kann zum einen auf die Kompensation der Eigenbewegung in Fahrtrichtung der erfindungsgemäßen Vorrichtung weitestgehend verzichtet werden. Zum anderen findet kaum eine Erdbewegung beim Stempelprozess statt, wodurch die Wahrscheinlichkeit für das Aufkeimen weiterer Beikräuter verringert bzw. ausgeschlossen wird.

Es ist ferner vorteilhaft, wenn die Klassifizierungseinheit die Positionsdaten des Beikrauts, insbesondere in Form einer Karte aufweist und/oder das Beikraut mittels einer Kameraeinheit und/oder einer Lasereinheit erkennt. Hierbei kann die Karte registrierte Bilder von eingetragenen Pflanzen aufweisen. Die Karte kann ferner beispielsweise in einer Speichereinheit einer Steuereinheit der Vorrichtung abgelegt sein. Es ist jedoch auch denkbar, dass die Positionsdaten des Beikrauts von einer Empfangseinheit der Steuereinheit der Vorrichtung empfangen werden. Alternativ und/oder kumulativ kann die Klassifizierungseinheit auch ausgebildet sein, um durch bildgebende Verfahren und Objekt-Klassifikation das Beikraut zu erkennen. Hierbei kann die Klassifikation beispielsweise durch die Pflanzenmorphologie mittels einer konventionellen Kamera, einer 3D Kamera und/oder eines Lasers erfolgen. Die Klassifikation kann ferner auch durch die Auswertung der Daten von Multi- und/oder Hyperspektralkameras erfolgen, wobei die Reflektivität bei unterschiedlichen Wellenlängen ausgewertet und hierdurch die Klassifikation durch bestimmte Pflanzenmerkmale ermöglicht wird.

Durch diese Maßnahme wird nicht einfach der Bereich um die Nutzpflanze "Blind" bearbeitet, sondern vielmehr das zu bekämpfende Beikraut direkt erkannt und registriert, so dass selbst bei einem sehr geringen Abstand zur Nutzpflanze eine effiziente Unkrautregulierung erfolgen kann.

Des Weiteren ist es vorteilhaft, wenn die Lokalisierungseinheit die Relativposition zwischen dem Bearbeitungswerkzeug und dem Beikraut mittels einer Kameraeinheit und/oder einer Lasereinheit ermittelt. Durch diese Maßnahme kann die Präzision des Beikrautregulierungsprozesses weiter erhöht werden. Da im Allgemeinen größere Unsicherheiten wie beispielsweise der Sensor trifft, die Bewegung der Vorrichtung, unsichere Maße etc. auftreten, ist die Lokalisierung der Vorrichtung zur Beschädigung des Beikrauts bzw. des Bearbeitungswerkzeuges notwendig. Letztere lässt sich z. B. aus der bekannten Einbaulage und entsprechender Sensorik in der kinematischen Kette aus der Vorrichtungsposititon berechnen. Zur Führung des Bearbeitungswerkzeugs benötigt die Manipulatoreinheit eine geschlossene Regelschleife, in der die relative Abweichung des Bearbeitungswerkzeugs zum Zielobjekt, nämlich dem Beikraut, zensiert wird. Erfindungsgemäß kann hierfür ein bildbasiertes Verfahren mittels einer Kameraeinheit eingesetzt werden. Hierbei kann insbesondere das "visual servoing" mittels einer visual serving Kamera (kurz VS-Kamera) zum Einsatz kommen. Neben Bildverarbeitung sind jedoch auch weitere, vergleichbare Technologien wie z. B. die Abtastung mittels eines Lasers einsetzbar.

Vorteilhafterweise ist die Lokalisierungseinheit bzw. die Kameraeinheit und/oder die Lasereinheit an der Manipulatoreinheit, insbesondere neben dem Bearbeitungswerkzeug angeordnet. Solche Systeme werden in der Fachsprache auch "Hand-I-Systeme" genannt. Weist die Vorrichtung mehrere Bearbeitungswerkzeuge auf, so kann für die individuelle Führung der Bearbeitungswerkzeuge jeweils an jedem eine Kamera angeordnet sein. Bei gleichzeitigem Einsatz mehrerer Bearbeitungswerkzeuge ist es ebenfalls denkbar, lediglich nur eine Kamera vorzusehen. Bearbeitungswerkzeuge mit einer individuellen Kamera verfügen jedoch über eine hohe Positioniergenauigkeit, weshalb generell jede weitere Kamera die Positioniergenauigkeit erhöht. Die Kamera kann aber auch ortsfest an der Vorrichtung befestigt sein und das Bearbeitungswerkzeug im Blickbereich haben und auf dieser Basis die Regelung ausführen.

Ohne den Rahmen der vorliegenden Erfindung zu verlassen, ist es jedoch durchaus möglich, dass die Klassifizierungseinheit und die Lokalisiserungseinheit ein und dieselbe Einheit bilden, und dadurch beispielsweise eine einzige Kamera die Doppelaufgabe erfüllt, nämlich die vorangehend beschriebene Klassifikationsaufgabe (Erkennung der Unkräuter) und die Ermittlung der Relativpositionen zwischen dem Bearbeitungswerkzeug und dem Beikraut (visual servoing), welche zur Führung des Bearbeitungswerkzeugs dient. Die genannten Ausführungsformen mit einer Mehrzahl von Bearbeitungswerkzeugen von Kameras sind hierbei in analoger Art und Weise anwendbar.

Vorteilhaft ist es weiterhin, wenn die Manipulatoreinheit mindestens zwei Manipulatoren mit jeweils mindestens einem Bearbeitungswerkzeug aufweist. Die Positionierung des Bearbeitungswerkzeugs erfolgt erfindungsgemäß durch die Manipulatoreinheit. Die Manipulatoreinheit kann hierbei entsprechende verschaltete Linarantriebe, ähnlich einem Plotter-System aufweisen. Die Manipulatoreinheit kann auch Spindelantriebe, Zahnriemenantriebe und Linarmotoren aufweisen. Denkbar ist ferner auch der Einsatz pneumatischer und hydraulischer Antriebe oder auch eine magnetische Führung (Schwebetechnik). Der Manipulator kann des Weiteren auch parallel minus kinematische Strukturen mit zwei oder drei translatorischen Freiheitsgraden sowie weiteren rotatorischen Freiheitsgraden aufweisen. Denkbar ist auch eine Ausgestaltung des Manipulators aus seriell minus kinematischen Strukturen.

Vorteilhaft ist es des Weiteren, wenn die mindestens zwei Manipulatoren ausgebildet sind, die Bearbeitungswerkzeuge unabhängig voneinander anzusteuern und innerhalb definierter Arbeitsbereiche zu bewegen. Durch diese Maßnahme kann insbesondere die Arbeitsleistung und die Effizienz erhöht werden. Vorteilhafterweise können die Arbeitsbereiche der Bearbeitungswerkzeuge parallel zueinander verlaufen. D. h., mit anderen Worten dass die Bearbeitungswerkzeuge parallel geschaltet sind, so dass mehrere parallele Manipulator/Bearbeitungswerkzeug-Kombinationen an der Vorrichtung angeordnet sind, wobei jedes Bearbeitungswerkzeug seinen dedizierten Arbeitsbereich hat. Die Erhöhung der Arbeitsgeschwindigkeit wird hierbei dadurch erreicht, dass jede Manipulator/Bearbeitungswerkzeug-Einheit nur vergleichsweise geringe Fahrwege hat, so dass weniger Zeitverlust zur Positionierung der Bearbeitungswerkzeuge entsteht.

Vorteilhafterweise können die Arbeitsbereiche der Bearbeitungswerkzeuge in Fahrtrichtung der Vorrichtung nebeneinander und/oder versetzt zueinander verlaufen. D. h., mit anderen Worten, dass mehrere Manipulator/Bearbeitungswerkzeug-Einheiten seriell zueinander hintereinander geschaltet sind, so dass jede Manipulator/Bearbeitungswerkzeug-Einheit den vollen Arbeitsbereich durchlaufen kann. Hierbei wird die Erhöhung der Arbeitsgeschwindigkeit (Fahrgeschwindigkeit für das Trägerfahrzeug) dadurch erreicht, dass die Manipulator-Bearbeitungswerkzeug-Einheiten sich die Aufgabe teilen. Eine intelligente Arbeits-Pfad Planung kann hierbei bestimmen, welche Einheit für welche Pflanzen zum Einsatz kommt. Werden mehrere Einheiten hintereinander geschaltet und parallel zueinander angeordnet, wird eine weitere Erhöhung der Arbeitsgeschwindigkeit (Fahrgeschwindigkeit des Trägerfahrzeugs) erzielt, wobei jede Einheit seinen dedizierten Arbeitsbereich hat und nur vergleichsweise geringe Fahrwege zurückzulegen hat, so dass weniger Zeitverlust zur Positionierung der Werkzeuge entsteht. Eine weitere vorteilhafte Ausgestaltung besteht darin, Manipulator/Bearbeitungswerkzeug-Einheiten in Modulen zusammenzufassen, und mehrere Module parallel zueinander anzuordnen. Hierbei kann jedes Modul seinen dedizierten Arbeitsbereich bzw. seine eigene zu bearbeitende Pflanzenreihe aufweisen. Hierdurch kann die Arbeitsleistung weiter erhöht werden da die Bearbeitung von mehreren Reihen parallel erfolgen kann. Ferner ist es durchaus denkbar, verschiedene Kombinationen aus dem vorangehend beschriebenen Anordnungen vorzusehen. Beispielsweise ergibt die serielle Schaltung von Anordnungen eine Art "auf Stempelkissen" mit dem sich selektiv eine ganze Fläche gleichzeitig bearbeiten lässt.

### Zeichnungen

Die Erfindung wird nachstehend anhand der beigefügten Zeichnungen beispielhaft näher erläutert. Es zeigt:
- Figur 1: eine schematische Darstellung einer erfindungsgemäßen Vorrichtung zur Beschädigung von Beikraut;
- Figur 2: eine schematische Draufsicht der erfindungsgemäßen Vorrichtung mit Bearbeitungswerkzeugen;
- Figur 3: eine schematische Draufsicht der erfindungsgemäßen Vorrichtung mit seriell verschalteten Bearbeitungswerkzeugen;
- Figur 4: eine schematische Draufsicht der erfindungsgemäßen Vorrichtung mit parallel und seriell hintereinander verschalteten Bearbeitungswerkzeugen; und
- Figur 5: eine schematische Draufsicht der erfindungsgemäßen Vorrichtung für spezifisch zu bearbeitende Pflanzenreihen.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet wobei auf eine wiederholte Beschreibung der Elemente verzichtet wird.

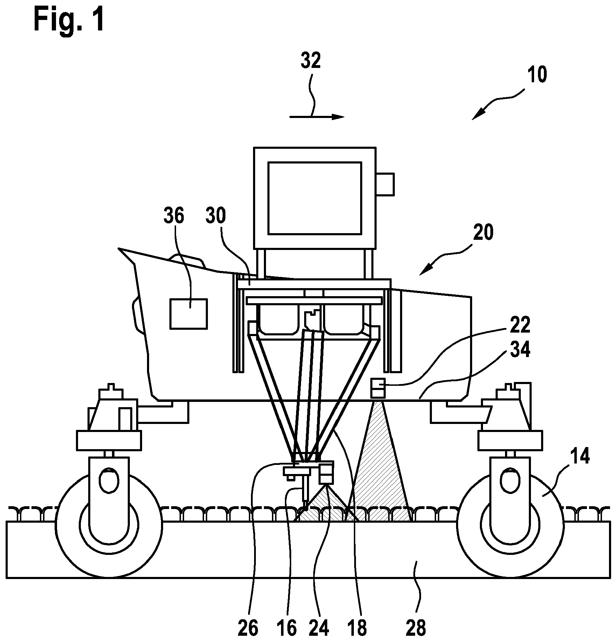

In Figur 1 ist eine erfindungsgemäße Beikrautregulierungsvorrichtung dargestellt, welche in ihrer Gesamtheit mit der Bezugsziffer 10 versehen ist.

Die Beikrautregulierungsvorrichtung ist als mobile Plattform ausgebildet. Hierfür weist die Beikrautregulierungsvorrichtung 10 eine Antriebseinheit 12 mit Rädern 14 auf.

Die Beikrautregulierungsvorrichtung 12 weist erfindungsgemäß ein Bearbeitungswerkzeug 16, welches an einem Manipulator 18 einer Manipulatoreinheit 20 angeordnet ist. Erfindungsgemäß weist die Beikrautregulierungsvorrichtung 10 ferner eine Klassifizierungseinheit 23 und eine Lokalisierungseinheit 24 auf. Im gezeigten Ausführungsbeispiel handelt es sich bei der Klassifizierungseinheit 22 und der Lokalisierungseinheit 24 um unterschiedliche Einheiten, wobei es durchaus denkbar ist, dass beide gemeinsam eine Einheit (22, 24) bilden. Im gezeigten Ausführungsbeispiel ist die Klassifizierungseinheit 22 als Bildgebendes System in Form einer Kamera ausgeführt.

Die Lokalisierungseinheit 24 ist als visual servoing Kamera ausgeführt und an einem unteren Manipulatorabschnitt 26 neben dem Bearbeitungswerkzeug 16 angeordnet. D. h., mit anderen Worten, dass die visual servoing Kamera 24 über dem Boden 28 "schwebt" und dort jeweils in unmittelbarer Nähe zum bearbeitenden Beikraut, die Relativpositionen zu dem Bearbeitungswerkzeug 16 ermittelt.

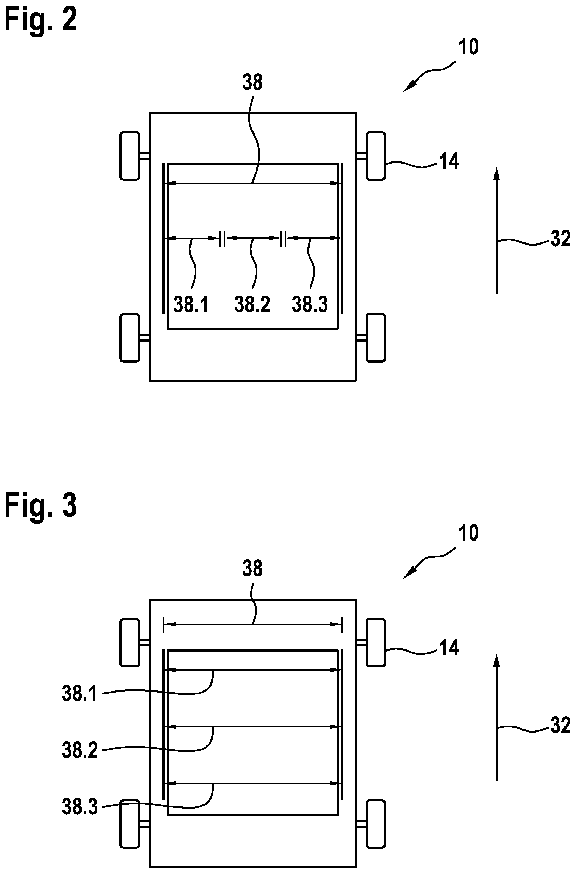

Wie aus Figur 1 ferner ersichtlich ist, weist die Manipulatoreinheit 20 ferner eine Positioniereinheit 30 auf, welche den Manipulator 18 ansteuert. Die Positioniereinheit 30 wird anhand der Figuren 2 bis 5 nachfolgend näher erläutert.

Um eine frühzeitige Erkennung des Beikrauts zu gewährleisten, ist die Klassifizierungseinheit 22 in Fahrtrichtung 32 der Unkrautregulierungsvorrichtung 10 im vorderen Bereich 34 angeordnet. Wie einleitend erläutert, kann auch vollständig auf die Klassifizierungseinheit verzichtet werden und stattdessen eine Karte mit den Positionsdaten des Beikrauts vorgesehen werden.

Des Weiteren weist die Unkrautregulierungsvorrichtung 10 eine Steuereinheit 36 auf. Die Steuereinheit 36 empfängt die Daten der Klassifizierungseinheit 22 bzw. verfügt über die Positionsdaten des Beikrauts beispielsweise in Form einer Karte und/oder durch Empfang der Positionsdaten mittels einer Empfangseinheit. Die Steuereinheit 36 empfängt ferner die Datentyp der Lokalisierungseinheit 24 und ermittelt hierdurch die präzise Relativposition zwischen dem Bearbeitungswerkzeug und dem Beikraut.

Durch die empfangene Steuereinheit 36 entsprechend die Manipulatoreinheit 20 bzw. den Manipulator 18, so dass das Bearbeitungswerkzeug 16 in eine entsprechende Position gebracht werden kann um durch eine vorzugsweise impulsförmige Auslösung das Beikraut durch Druckbeaufschlagung zu beschädigen bzw. zu vernichten.

In den Figuren 2 bis 5 sind unterschiedliche Ausgestaltungen bzw. Anordnungen der Manipulatoreinheit und der entsprechenden Manipulatoren gezeigt. Hierbei sind jeweils 3 Manipulatoren 18 vorgesehen, welche jeweils ein Bearbeitungswerkzeug 16 aufweisen. Die Manipulatoren 18 sind unabhängig voneinander ansteuerbar und können das Bearbeitungswerkzeug in einem gesamten Arbeitsbereich 38 innerhalb definierter Arbeitsbereiche (38.1, 38.2, 38.3) bewegen.

In Figur 2 ist eine parallel-Schaltung der Bearbeitungswerkzeuge gezeigt. D. h., mit anderen Worten, dass die Arbeitsbereiche 38.1, 38.2, 38.3 parallel zueinander und in Fahrtrichtung 32 der Unkrautregulierungsvorrichtung 10 nebeneinander angeordnet sind. Hierdurch hat jedes Bearbeitungswerkzeug 16 vergleichsweise nur geringe Fahrwege zurückzulegen, so dass ein geringerer Zeitverlust zur Positionierung entsteht.

In Figur 3 ist eine Serienschaltung der Bearbeitungswerkzeuge 16 gezeigt. Hierbei weist jedes Bearbeitungswerkzeug 16 wiederum jeweils einen eigenen Arbeitsbereich 38.1, 38.2, 38.3 auf, welche wiederum parallel jedoch im Gegensatz zu der in Figur 2 gezeigten Ausführungsform in Fahrtrichtung 32 der Unkrautregulierungsvorrichtung 10 hintereinander angeordnet sind. In dieser Ausführungsform kann jedes Bearbeitungswerkzeug 16 den gesamten Arbeitsbereich 38 durchfahren, wobei mittels intelligenter Arbeit und/oder Fahrtplanung der Steuereinheit 36 bestimmt werden kann welches Bearbeitungswerkzeug für welche Pflanzen zum Einsatz kommt, so dass die Fahrgeschwindigkeit für die Unkrautregulierungsvorrichtung 10 und damit die Arbeitsgeschwindigkeit erhöht werden kann.

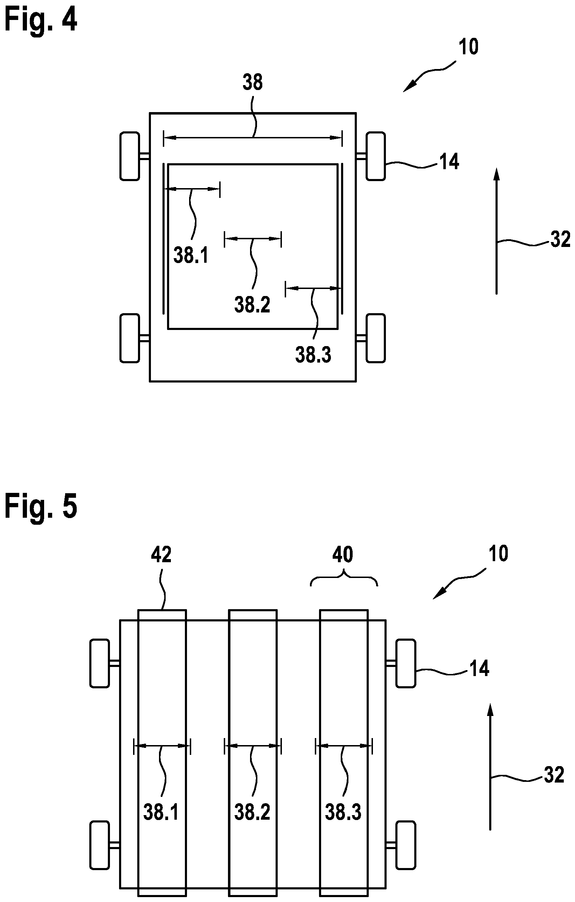

In dem in Figur 4 gezeigten Ausführungsbeispiel der Unkrautregulierungsvorrichtung 10 sind die Arbeitsbereiche 38.1, 38.2, 38.3 der Bearbeitungswerkzeuge 16 in Fahrtrichtung 32 der Unkrautregulierungsvorrichtung 10 nebeneinander und versetzt zueinander angeordnet. Wiederum hat jedes Bearbeitungswerkzeug 10 seinen dedizierten Arbeitsbereich, wobei auch hier durch vergleichsweise geringe Fahrwege die Arbeitsgeschwindigkeit erhöht werden kann.

In Figur 5 ist eine Unkrautregulierungsvorrichtung 10 mit Bearbeitungswerkzeugen 16 gezeigt, welche zueinander beabstandete Arbeitsbereiche 38.1, 38.2, 38.3 aufweisen. Die Arbeitsbereiche sind zwar wie in der in Figur 2 gezeigten Ausführungsform parallel und in Fahrtrichtung 32 der Unkrautregulierungsvorrichtung 10 nebeneinander angeordnet, jedoch ist eine bewusste Lücke zwischen den Arbeitsbereichen 38.1, 38.2, 38.3 vorgesehen, an der keine Unkrautregulierung vorgenommen werden muss, so dass die Fahrwege der Bearbeitungswerkzeuge 16 weiter gekürzt werden können.

## Patentansprüche

1. Vorrichtung zur Beschädigung von Beikraut mit
- einem Bearbeitungswerkzeug (16), welches ausgebildet ist das Beikraut zu beschädigen;
- einer Klassifizierungseinheit (22), welche Positionsdaten des Beikrauts aufweist und/oder ausgebildet ist Beikraut zu erkennen;
- einer Lokalisierungseinheit (24), welche ausgebildet ist eine Relativposition zwischen dem Bearbeitungswerkzeug (16) und dem Beikraut zu ermitteln; und
- einer Manipulatoreinheit (20), welche ausgebildet ist das Bearbeitungswerkzeug (16) in Abhängigkeit von der ermittelten Relativposition entsprechend zu positionieren,
**dadurch gekennzeichnet, dass** das Bearbeitungswerkzeug (16) ausgebildet ist, einen impulsförmigen Druck auszuüben, um das Beikraut zu beschädigen, wobei das Bearbeitungswerkzeug (16) insbesondere als Stempel (16) ausgebildet ist.

2. Vorrichtung (10) nach Anspruch 1, **dadurch gekennzeichnet, dass** die Klassifizierungseinheit (22) die Positionsdaten des Beikrauts, insbesondere in Form einer Karte aufweist und/ oder das Beikraut mittels einer Kameraeinheit (22) und/oder einer Lasereinheit (22) erkennt.

3. Vorrichtung (10) nach einem der vorhergehenden Ansprüche, **dadurch gekennzeichnet, dass** die Lokalisierungseinheit (24) die Relativposition zwischen dem Bearbeitungswerkzeug (16) und dem Beikraut mittels einer Kameraeinheit (24) und/oder einer Lasereinheit (24) ermittelt.

4. Vorrichtung (10) nach einem der vorhergehenden Ansprüche, **dadurch gekennzeichnet, dass** die Lokalisierungseinheit (24) an der Manipulatoreinheit (20), insbesondere neben dem Bearbeitungswerkzeug (16) angeordnet ist.

5. Vorrichtung (10) nach einem der vorhergehenden Ansprüche, **dadurch gekennzeichnet, dass** die Manipulatoreinheit (20) mindestens zwei Manipulatoren (18) mit jeweils mindestens einem Bearbeitungswerkzeug (16) aufweist.

6. Vorrichtung (10) nach Anspruch 5, **dadurch gekennzeichnet, dass** die mindestens zwei Manipulatoren (18) ausgebildet sind, die Bearbeitungswerkzeuge (16) unabhängig voneinander anzusteuern und innerhalt definierter Arbeitsbereiche (38.1, 38.2, 38.3) zu bewegen.

7. Vorrichtung (10) nach Anspruch 6, **dadurch gekennzeichnet, dass** die Arbeitsbereiche (38.1, 38.2, 38.3) der Bearbeitungswerkzeuge (16) parallel zueinander verlaufen.

8. Vorrichtung (10) nach Anspruch 7, **dadurch gekennzeichnet, dass** die Arbeitsbereiche (38.1, 38.2, 38.3) der Bearbeitungswerkzeuge (16) in Fahrtrichtung (32) der Vorrichtung (10) nebeneinander und/oder versetzt zueinander verlaufen.

9. Verfahren zur Beschädigung von Beikraut mit folgenden Schritten:
- Bereitstellen (100) eines Bearbeitungswerkzeugs (16);
- Ermitteln einer Position eines Beikrauts mittels einer Klassifizierungseinheit (22), welche Positionsdaten des Beikrauts in Form einer Karte aufweist und/oder das Beikraut mittels einer Kameraeinheit (22) und/oder einer Lasereinheit (22) erkennt;
- Ermitteln einer Relativposition zwischen dem Bearbeitungswerkzeug (16) und dem Beikraut mittels einer Lokalisierungseinheit (24), welche eine Kameraeinheit (24) aufweist;
- Positionieren des Bearbeitungswerkzeugs (16) in Abhängigkeit von der ermittelten Relativposition mittels einer Manipulatoreinheit (20);
- Beschädigen des Beikrauts mittels des Bearbeitungswerkzeugs (16) durch ein impulsförmiges Druckbeaufschlagen des Beikrauts, wobei das Bearbeitungswerkzeug (16) insbesondere als Stempel (16) ausgebildet ist.

## Claims

1. Device for damaging weeds, having
- a treatment tool (16) which is designed to damage the weeds;
- a classification unit (22) which has position data of the weeds and/or is designed to detect weeds;
- a localization unit (24) which is designed to determine a relative position between the treatment tool (16) and the weeds; and
- a manipulator unit (20) which is designed to position the treatment tool (16) appropriately in a manner dependent on the determined relative position,
**characterized in that** the treatment tool (16) is designed to exert a pressure in the form of a pulse in order to damage the weeds, wherein the treatment tool (16) is formed in particular as a stamp (16).

2. Device (10) according to Claim 1, **characterized in that** the classification unit (22) has the position data of the weeds, in particular in the form of a map, and/or detects the weeds by means of a camera unit (22) and/or a laser unit (22).

3. Device (10) according to either of the preceding claims, **characterized in that** the localization unit (24) determines the relative position between the treatment tool (16) and the weeds by means of a camera unit (24) and/or a laser unit (24).

4. Device (10) according to one of the preceding claims, **characterized in that** the localization unit (24) is arranged on the manipulator unit (20), in particular adjacent to the treatment tool (16).

5. Device (10) according to one of the preceding claims, **characterized in that** the manipulator unit (20) has at least two manipulators (18), which each have at least one treatment tool (16).

6. Device (10) according to Claim 5, **characterized in that** the at least two manipulators (18) are designed to control the treatment tools (16) independently of one another and to move said treatment tools within defined working regions (38.1, 38.2, 38.3).

7. Device (10) according to Claim 6, **characterized in that** the working regions (38.1, 38.2, 38.3) of the treatment tools (16) run parallel to one another.

8. Device (10) according to Claim 7, **characterized in that** the working regions (38.1, 38.2, 38.3) of the treatment tools (16) run adjacent to one another and/or offset from one another in the direction of travel (32) of the device (10).

9. Method for damaging weeds, having the following steps:
- providing (100) a treatment tool (16);
- determining a position of weeds by means of a classification unit (22) which has position data of the weeds in the form of a map and/or detects the weeds by means of a camera unit (22) and/or a laser unit (22);
- determining a relative position between the treatment tool (16) and the weeds by means of a localization unit (24) which has a camera unit (24);
- positioning the treatment tool (16) in a manner dependent on the determined relative position by means of a manipulator unit (20);
- damaging the weeds by means of the treatment tool (16) by exertion of a pressure in the form of a pulse on the weeds, wherein the treatment tool (16) is formed in particular as a stamp (16).

## Revendications

1. Dispositif de détérioration des mauvaises herbes avec
- un outil de traitement (16), lequel est constitué pour détériorer les mauvaises herbes,
- une unité de classification (22), laquelle comporte des données de position des mauvaises herbes et/ou est constituée pour identifier les mauvaises herbes,
- une unité de localisation (24), laquelle est constituée pour déterminer une position relative entre l'outil de traitement (16) et les mauvaises herbes, et
- une unité de manipulateurs (20), laquelle est constituée pour positionner en conséquence l'outil de traitement (16) en fonction de la position relative déterminée,
**caractérisé en ce que** l'outil de traitement (16)
est constitué pour exercer une pression sous forme d'impulsions pour détériorer les mauvaises herbes, sachant que l'outil de traitement (16) est constitué notamment sous la forme d'un poinçon (16).

2. Dispositif (10) selon la revendication 1, **caractérisé en ce que** l'unité de classification (22) comporte les données de position des mauvaises herbes, notamment sous la forme d'une carte et/ou identifie les mauvaises herbes au moyen d'une unité de caméra (22) et/ou d'une unité laser (22).

3. Dispositif (10) selon l'une quelconque des revendications précédentes, **caractérisé en ce que** l'unité de localisation (24) détermine la position relative entre l'outil de traitement (16) et les mauvaises herbes au moyen d'une unité de caméra (24) et/ou d'une unité laser (24).

4. Dispositif (10) selon l'une quelconque des revendications précédentes, **caractérisé en ce que** l'unité de localisation (24) est disposée sur l'unité de manipulateurs (20), notamment près de l'outil de traitement (16).

5. Dispositif (10) selon l'une quelconque des revendications précédentes, **caractérisé en ce que** l'unité de manipulateurs (20) comporte au moins deux manipulateurs (18) avec respectivement au moins un outil de traitement (16).

6. Dispositif (10) selon la revendication 5, **caractérisé en ce que** les au moins deux manipulateurs (18) sont constitués pour commander les outils de traitement (16) indépendamment l'un de l'autre et les déplacer à l'intérieur de zones de travail définies (38.1, 38.2, 38.3).

7. Dispositif (10) selon la revendication 6, **caractérisé en ce que** les zones de travail (38.1, 38.2, 38.3) des outils de traitement (16) passent parallèlement les unes aux autres.

8. Dispositif (10) selon la revendication 7, **caractérisé en ce que** les zones de travail (38.1, 38.2, 38.3) des outils de traitement (16) passent dans le sens de la marche (32) du dispositif (10) les unes à côté des autres et/ou décalées les unes par rapport aux autres.

9. Procédé de détérioration des mauvaises herbes avec les étapes suivantes :
- fourniture (100) d'un outil de traitement (16),
- détermination d'une position des mauvaises herbes au moyen d'une unité de classification (22), laquelle comporte des données de position des mauvaises herbes sous la forme d'une carte et/ou identifie les mauvaises herbes au moyen d'une unité de caméra (22) et/ou d'une unité laser (22),
- détermination d'une position relative entre l'outil de traitement (16) et les mauvaises herbes au moyen d'une unité de localisation (24), laquelle comporte une unité de caméra (24),
- positionnement de l'outil de traitement (16) en fonction de la position relative déterminée au moyen d'une unité de manipulateur (20),
- détérioration de mauvaises herbes au moyen de l'outil de traitement (16) par une sollicitation par pression sous forme d'impulsions des mauvaises herbes, sachant que l'outil de traitement (16) est constitué notamment sous la forme d'un poinçon (16).
